# EUROPEAN PATENT APPLICATION

(11) **EP 3 456 898 A1**
(43) Date of publication of application: **20.03.2019**
(21) Application number: 18193281.5
(22) Date of filing: 07.09.2018
(51) Int. Cl.: E04F 10/06

(54) **RETRACTABLE AWNING WIND DAMAGE PREVENTION**

(30) Priority: 07.09.2017 US 201762555244 P
(71) Applicant: Lippert Components Inc., Elkhart IN 46514 (US)
(72) Inventor: PROHASZKA, Thomas Herman, Armada, MI Michigan 48005 (US); HIGBEE, Kenneth Alan, Bloomfield Hills, MI Michigan 48302 (US); CATTERMOLE, David James, Oakland Township, MI Michigan 48306 (US); MANFREDA, John Peter, St. Clair Shores, MI Michigan 48081 (US)
(74) Representative: J A Kemp

(57) **Abstract**

A method and device (10) for preventing wind damage to a retractable awning (18) comprises a processor (14) that detects an oscillatory characteristic of movement signals received from an awning movement sensor (12), and generates an awning retraction signal if the oscillatory characteristic meets a predetermined retraction criterion. The sensor may comprise a gyroscopic sensor that detects angular movement of an awning portion and generates corresponding angular movement signals. The processor may detect predetermined angular movement signal events in the angular movement signals, calculate time elapsed between the events, and transmit a retraction signal when an angular movement signal characteristic relating to time elapsed between angular movement signal events meets at least one predetermined retraction criterion.

## Description

This patent application claims the benefit of priority from U.S. provisional patent application number 62/555,244 filed on September 7, 2017, the entire contents of which are incorporated herein.

This application relates generally to a device and method for preventing wind damage to a retractable awning.

Many buildings and recreational vehicles employ retractable awnings to temporarily shield an area from environmental effects like sun or rain. Awning retraction allows sun in when desired, and where an awning is attached to a vehicle, it reduces the footprint and drag of the awning when the vehicle is under way. However, retractable awnings are generally more vulnerable to wind damage than permanent awnings, and often need to be retracted in high or gusty winds.

Known systems for automatically retracting such an awning are generally configured to retract an awning in response to a comparison of a sensed awning movement to an arbitrarily defined threshold amplitude. If the awning deflects by a certain amount of deflection, or deflects with a certain speed, known retraction systems will determine that wind conditions are dangerous and will retract the awning. Known systems of this type, however, are unable to diagnose and analyze subtler awning behaviors that might have more predictive utility than predetermined awning movement thresholds.

For example, in response to impingement of even a relatively low velocity wind from certain angles, an awning may begin to oscillate. The oscillation may involve only a small deflection - perhaps insufficient to meet a predetermined threshold for a damaging one-time deflection - but may, nonetheless be capable of causing a deleterious amount of fatigue to a structure if the oscillation occurs at certain frequencies and/or is sustained for a sufficient period of time. The threshold settings or sensor configurations of known systems cannot be practically tuned to prevent awning damage in such situations without becoming prone to unnecessarily retracting an awning.

A device for preventing wind damage to a retractable awning is provided. The device comprises a sensor configured and positionable to detect movement of a portion of a retractable awning and to generate corresponding movement signals, and a processor in communication with the sensor and configured to detect an oscillatory characteristic of the movement signals and generate an awning retraction signal if the oscillatory characteristic meets a predetermined retraction criterion.

The device may comprise a gyroscopic sensor supportable on a portion of a retractable awning and configured to detect angular movement of the awning portion and to generate corresponding angular movement signals, and a processor in communication with the gyroscopic sensor. In a device constructed according to this embodiment, the processor is configured to detect predetermined angular movement signal events in the angular movement signals and to calculate time elapsed between the angular movement signal events. to the processor transmits a retraction signal when an angular movement signal characteristic relating to time elapsed between angular movement signal events meets at least one predetermined retraction criterion.

A method for preventing wind damage to a retractable awning is also provided. The method comprises the steps of sensing movement of a portion of a retractable awning, determining an oscillatory characteristic of the awning portion movement, comparing the oscillatory characteristic to a predetermined retraction criterion, and transmitting an awning retraction signal if the oscillatory characteristic meets the predetermined retraction criterion.

There is disclosed a device for preventing wind damage to a retractable awning, the device comprising a sensor and a processor. The sensor is optionally configured and positionable to detect movement of a portion of a retractable awning and to generate corresponding movement signals. The processor is optionally in communication with the sensor and configured to detect an oscillatory characteristic of the movement signals and generate an awning retraction signal if the oscillatory characteristic meets a predetermined retraction criterion.

Optionally, the sensor comprises a gyroscopic sensor configured to detect angular motion of a portion of a retractable awning and to generate movement signals comprising corresponding angular movement data.

Optionally, the processor is configured to determine the oscillatory characteristic by calculating the period of an oscillation of at least a portion of at least one of the movement signals.

Optionally, the processor is configured to calculate a sinusoidal period of oscillatory waves in movement signals generated within a predetermined moving time window optimized to detect damaging awning motion based on sinusoidal periodicity of the movement signals.

Optionally, the sensor is configured and positionable to sense motion of a support arm of a retractable awning.

Optionally, the sensor is configured to be carried by the support arm.

Optionally, the device includes a field bus configured to transmit retraction signals from the processor to an awning retractor.

Optionally, the field bus is configured to transmit retraction signals from the processor to an awning motor controller that commands an awning retractor motor to retract an awning in response to a retract signal received via the field bus.

There is disclosed a device for preventing wind damage to a retractable awning, the device comprising a gyroscopic sensor and a processor. The sensor is optionally supportable on a portion of a retractable awning and configured to detect angular movement of the awning portion and to generate corresponding angular movement signals. The processor is optionally in communication with the gyroscopic sensor and may be configured to detect predetermined angular movement signal events in the angular movement signals and to calculate time elapsed between the angular movement signal events, and to optionally transmit a retraction signal when an angular movement signal characteristic relating to time elapsed between angular movement signal events meets at least one predetermined retraction criterion.

Optionally, the angular movement signal events comprise a zero-crossing event.

Optionally, the angular movement signal events comprise a peak event or a nadir event.

Optionally, the processor is configured to transmit the retraction signal when a frequency of occurrence of the angular movement signal events reaches a predetermined value.

Optionally, the processor is configured to transmit the retraction signal when both the amplitude of angular motion and the angular movement signal event frequency reach predetermined values.

Optionally, the processor is configured to measure time elapsed between angular movement signal events detected within a predetermined moving time window optimized to detect damaging awning motion based on elapsed time between the angular movement signal events.

There is disclosed a method for preventing wind damage to a retractable awning, the method comprising the steps of sensing movement of a portion of a retractable awning; determining an oscillatory characteristic of the awning portion movement; comparing the oscillatory characteristic to a predetermined retraction criterion; and transmitting an awning retraction signal if the oscillatory characteristic meets the predetermined retraction criterion.

Optionally, the sensing step includes sensing angular awning portion movement and generating corresponding angular movement data, and the method includes the additional step of removing unwanted noise from the angular movement data by applying a filter to the angular movement data.

Optionally, the step of removing unwanted noise includes tuning at least one filter to block or pass angular movement data having a frequency of a predetermined value or falling within a predetermined range of values.

Optionally, the determining step includes determining an oscillatory characteristic by determining time elapsed between predetermined types of events in the awning portion movement.

Optionally, the determining step includes determining an oscillatory characteristic by determining time elapsed between repetitions of zero-crossing events in a waveform representing the awning portion movement.

Optionally, the determining step includes determining an oscillatory characteristic by determining time elapsed between peak events or nadir events in a waveform representing awning portion movement.

Optionally, the determining step includes determining an oscillatory characteristic by: determining angular rate of angular awning portion movement, and determining a frequency of occurrence of the predetermined types of events in the awning portion movement.

Optionally, the determining step includes monitoring elapsed times between the predetermined types of events as those events occur within a moving time window that is optimized to allow for detection of damaging awning motion based on elapsed time between the rate of movement signal events.

These and other features and advantages will become apparent to those skilled in the art in connection with the following detailed description and appended drawings, in which:
Fig. 1 is a partial-cutaway perspective view of a device for preventing wind damage to a retractable awning, with the device shown installed on a support arm of a retractable awning carried by a vehicle.
Fig. 2 is a magnified partial-cutaway perspective view of the device of Fig. 1 installed on a support arm of a retractable awning.
Fig. 3 is a block diagram of the device of Fig. 1.
Fig. 4 is a flow chart showing a method for preventing wind damage to a retractable awning.

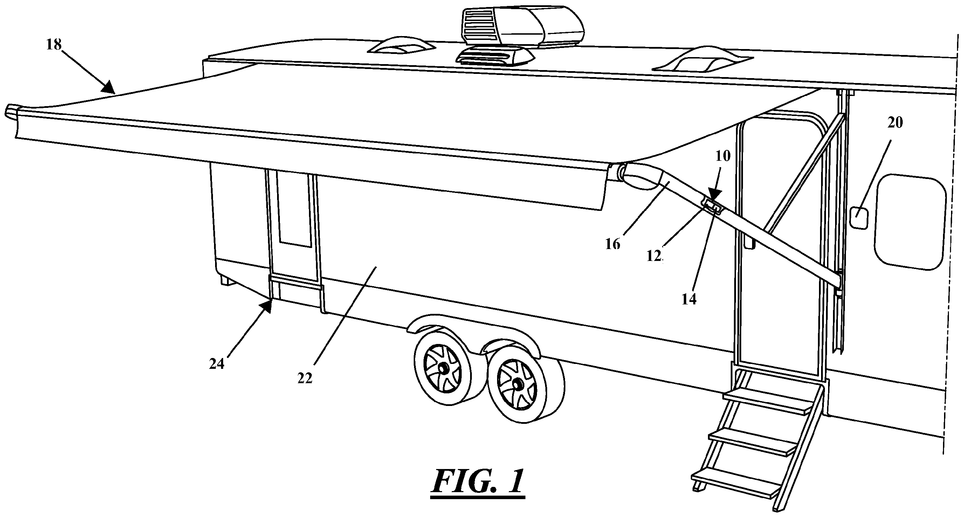

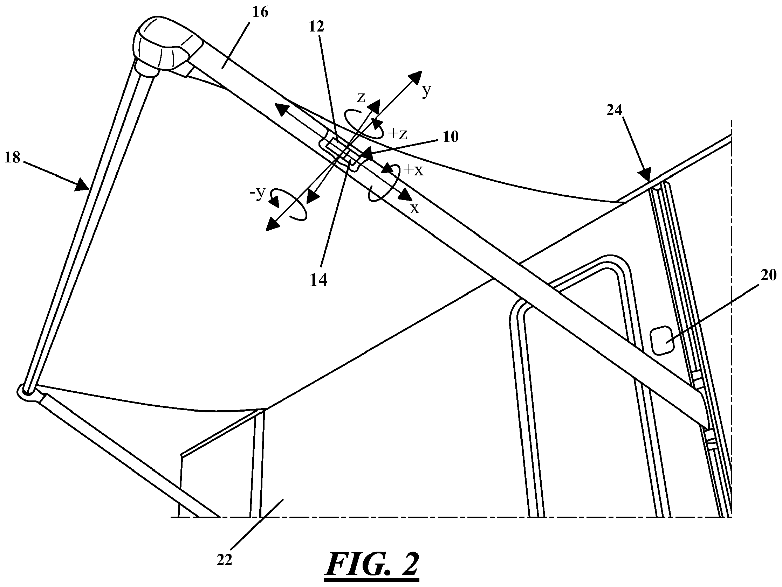

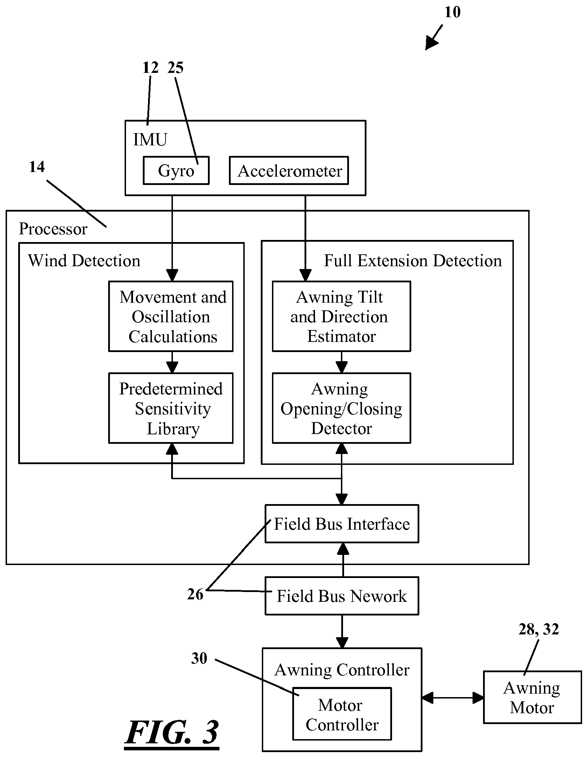

A device for preventing wind damage to a retractable awning is generally indicated at 10 in Figures 1 and 2 and is generally shown at 10 in Figure 3. As shown in Figure 3, the device 10 may comprise a movement detection sensor 12 connected to a processor 14 that commands awning retraction when movement signals received from the sensor 12 meet one or more criteria.

As shown in Figures 1 and 2, the movement detection sensor 12 may be positioned on or carried by a portion 16 of a retractable awning 18, such as a support arm of the awning 18. The movement detection sensor 12 detects movement of the portion 16 of the awning 18 upon which the sensor 12 is positioned or carried, and generates corresponding movement signals. However, in other embodiments, the sensor 12 may be carried by any structure, and mounted in any position that allows the sensor 12 to detect movement of any awning portion by any suitable means known in the art.

As best shown in Figures 1 and 2, the processor 14 may include the sensor 12 as a component part. But in other embodiments the processor 14 may be mounted separately from the sensor 12. For example, the processor 14 may be included in a control panel 20 that may be mounted to an outer side wall 22 of a recreational vehicle 24 upon which the retractable awning 18 is mounted, or in any suitable type of control module in any location that allows the processor 14 to receive signals from the movement detection sensor 12 and successfully command awning 18 retraction.

As shown in Figure 3, the processor 14 may be connected to and in communication with the movement detection sensor 12 so as to receive the movement signals generated by the sensor 12. The processor 14 may be programmed to detect an oscillatory characteristic of the movement signals received from the movement detection sensor 12, and to generate an awning retraction signal if the oscillatory characteristic meets a predetermined retraction criterion.

These oscillatory characteristics of the signals generated by the sensor 12 reflect oscillatory motions of the awning 18 and, more importantly, can be used as subtle clues to diagnose the state of both the wind and the awning 18. For example, wind hitting the awning 18 with different speeds, angles and gust patterns may cause the awning 18 to billow and flutter in different ways. Small wind gusts may produce low magnitude rates of angular motion in the awning 18 with low sinusoidal periods, while larger wind gusts may produce larger magnitude rates of angular motion with increased sinusoidal periods. A modest wind of some particular combination of strength and direction may even cause the awning 18 to begin to flutter at a self-reinforcing harmonic frequency.

To diagnose this kind of data, and determine whether or not it meets a predetermined retraction criterion, the processor 14 may be programmed to determine the oscillatory characteristic of the movement signals received from the sensor 12 by, for example, calculating the period of an oscillation of at least a portion of at least one of the movement signals.

The processor 14 may also, or alternatively, be configured to calculate and monitor sinusoidal (or sinusoidal-like) periods of oscillatory waves in movement signals as they are generated within a predetermined moving time window. The moving time window may be predetermined in such a way as to optimize detection of damaging awning motion based on sinusoidal periodicity of the movement signals. For example, the window may be tuned so that the processor 14 ignores data that might be too old or too new to be significantly relevant or reliable.

As shown in Figure 3, the sensor 12 may comprise a gyroscopic sensor 25 that detects angular motion of the portion 16 of the retractable awning 18 upon which the sensor 12 is positioned, and that generates movement signals comprising corresponding angular movement data. As is also shown in Figure 3, the processor 14 may be in communication with the gyroscopic sensor 25 and programmed to detect predetermined types of angular movement signal events in the angular movement signals received from the gyroscopic sensor 25. According to other embodiments, these signal events may be diagnostically significant in their own right, or they may be used as symptomatic clues to determine or approximate oscillatory characteristics of the movement signals or of the movement of the awning portion 16.

One or more of the angular movement signal event types that the processor 14 may be programmed to detect, may comprise a zero-crossing event, i.e., a passage upward or downward through a zero value by a waveform of the angular movement signal. Alternatively, or in addition, one or more of the angular movement signal event types that the processor 14 may be programmed to detect may comprise a peak event or a nadir event i.e., the attainment of a peak or nadir value of the waveform of the angular movement signal.

The processor 14 may also, or alternatively, be programmed to calculate time elapsed between the angular movement signal events, and to transmit a retraction signal when an angular movement signal characteristic relating to time elapsed between angular movement signal events meets at least one predetermined criterion such as a minimum or maximum elapsed time value.

The processor 14 may also, or alternatively, be programmed to transmit the retraction signal when a frequency of occurrence of the angular movement signal events reaches a predetermined value. Alternatively, or in addition, the processor 14 may be programmed to transmit the retraction signal when both the amplitude of angular motion and the angular movement signal event frequency reach predetermined values.

Alternatively, or in addition, the processor 14 may be programmed to measure time elapsed between angular movement signal events detected within a predetermined moving time window, where the size of the moving time window is optimized to detect damaging awning motion based on elapsed time between the angular movement signal events.

As shown in Figure 3, the device 10 may include a field bus 26 that transmits retraction signals from the processor 14 to an awning retractor 28. The field bus 26 may also be configured to allow an operator to remotely adjust the processor's predetermined criteria for retraction in order to make the processor 14 more or less sensitive. The field bus 26 may also, or alternatively, transmit retraction signals from the processor 14 to an awning motor controller 30 that commands an awning retractor (such as a motor) 32 to retract an awning 18 in response to a retract signal received via the field bus 26. In other embodiments, any suitable means may be used to transmit retraction signals from the processor 14 to an awning retractor 28.

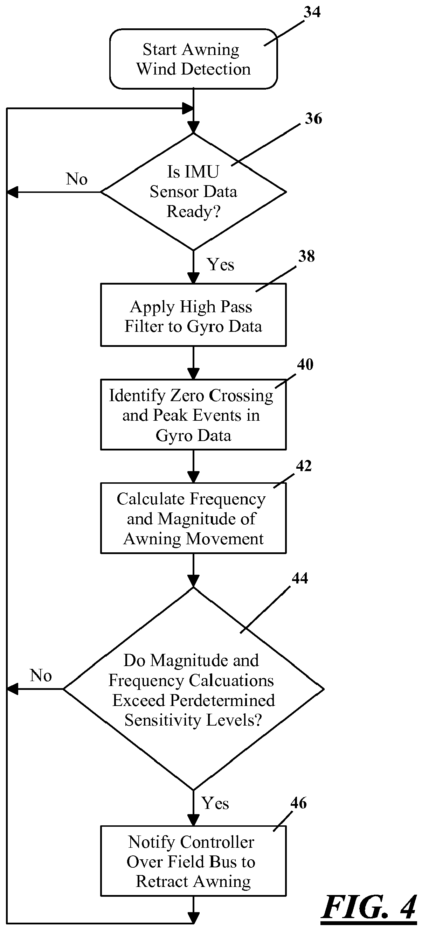

In practice, and as shown in Figure 4, wind damage to a retractable awning may be prevented or mitigated by sensing movement of a portion 16 of a retractable awning as shown in action step 34, determining an oscillatory characteristic of the awning portion movement as shown in action steps 40 and 42, comparing the oscillatory characteristic to a predetermined criterion as shown in decision step 44, and then transmitting an awning retraction signal if the oscillatory characteristic meets the predetermined criterion as shown in action step 46.

The movement of a portion 16 of a retractable awning 18 may be sensed by sensing the angular movement of the portion 16 of the awning, and generating corresponding angular movement data. Once this data is generated and available for analysis, as shown in decision step 36, unwanted noise may be removed from the angular movement data by applying a filter to the angular movement data as shown in action step 38. The removal of unwanted noise may also or alternatively include tuning at least one filter to block or pass angular movement data having a frequency of a predetermined value or falling within a predetermined range of values. For example, the processor 14 may be programmed to include a high pass filter (as shown in action step 38) tuned to remove DC bias in signals generated in response to sensed movements, while other additional or alternative filters may be tuned to block frequencies typical of harmlessly slow winds, or high frequency noise generated by nearby electronics.

As shown in action steps 40 and 42 of Figure 4, the oscillatory characteristic may be determined by measuring time elapsed between predetermined types of events in the awning portion movement. Alternatively, or in addition, an oscillatory characteristic may be determined by measuring time elapsed between repetitions of zero-crossing events in a waveform representing the awning portion movement. Alternatively, or in addition, an oscillatory characteristic may be determined by measuring time elapsed between peak events or nadir events in a waveform representing awning portion movement. Alternatively, or in addition, an oscillatory characteristic may be determined by determining angular rate of angular awning portion movement, and determining a frequency of occurrence of the predetermined types of events in the awning portion movement.

Alternatively, or in addition, the determination of an oscillatory characteristic of the awning portion movement may include monitoring elapsed times between the predetermined types of events as those events occur within a moving time window, where the moving time window is optimized to allow for detection of damaging awning motion based on elapsed time between the rate of movement signal events.

A device configured according to the various embodiments recited above, and employed according to the method recited above, is able to identify any number of structurally dangerous combinations of oscillatory characteristics, signal events, and amplitudes of motion, etc., in order to reactively or preventatively retract an awning before it incurs serious damage from wind activity. Notably, according to a preferred embodiment, the device and method may be constructed and performed via the angular motion data of a single gyroscopic sensor, although other embodiments may employ additional sensors and data types to improve accuracy.

This description, rather than describing limitations of an invention, only illustrates preferred embodiments of the invention recited in the claims. The language of this description is therefore exclusively descriptive and is non-limiting. Obviously, it's possible to modify this invention from what the description teaches. Within the scope of the claims, one may practice the invention other than as described above.

## Claims

1. A device for preventing wind damage to a retractable awning, the device comprising:
a sensor configured and positionable to detect movement of a portion of a retractable awning and to generate corresponding movement signals; and
a processor in communication with the sensor and configured to detect an oscillatory characteristic of the movement signals and generate an awning retraction signal if the oscillatory characteristic meets a predetermined retraction criterion.

2. The device of claim 1, in which the processor is configured to determine the oscillatory characteristic by calculating the period of an oscillation of at least a portion of at least one of the movement signals;
optionally wherein the processor is configured to calculate a sinusoidal period of oscillatory waves in movement signals generated within a predetermined moving time window optimized to detect damaging awning motion based on sinusoidal periodicity of the movement signals.

3. The device of claim 1 or 2, in which the sensor is configured and positionable to sense motion of a support arm of a retractable awning.

4. The device of any one of the preceding claims, in which the sensor is configured to be carried by a support arm of a retractable awning.

5. The device of any one of the preceding claims, in which the device includes a field bus configured to transmit retraction signals from the processor to an awning retractor;
optionally wherein the field bus is configured to transmit retraction signals from the processor to an awning motor controller that commands an awning retractor motor to retract an awning in response to a retract signal received via the field bus.

6. The device of any one of the preceding claims, wherein the sensor is a gyroscopic sensor supportable on a portion of a retractable awning and configured to detect angular movement of the awning portion and to generate corresponding angular movement signals; and
optionally wherein the processor is in communication with the gyroscopic sensor and configured to detect predetermined angular movement signal events in the angular movement signals and to calculate time elapsed between the angular movement signal events, and to transmit a retraction signal when an angular movement signal characteristic relating to time elapsed between angular movement signal events meets at least one predetermined retraction criterion.

7. The device of claim 6, in which the angular movement signal events comprise a zero-crossing event, a peak event or a nadir event.

8. The device of claim 6 or 7, in which the processor is configured to transmit the retraction signal when:
(a) a frequency of occurrence of the angular movement signal events reaches a predetermined value; or
(b) both the amplitude of angular motion and the angular movement signal event frequency reach predetermined values.

9. The device of any one of claims 6 to 8, in which the processor is configured to measure time elapsed between angular movement signal events detected within a predetermined moving time window optimized to detect damaging awning motion based on elapsed time between the angular movement signal events.

10. A method for preventing wind damage to a retractable awning, the method comprising the steps of:
sensing movement of a portion of a retractable awning;
determining an oscillatory characteristic of the awning portion movement;
comparing the oscillatory characteristic to a predetermined retraction criterion; and
transmitting an awning retraction signal if the oscillatory characteristic meets the predetermined retraction criterion.

11. The method of claim 10, in which:
the sensing step includes sensing angular awning portion movement and generating corresponding angular movement data, and
the method includes the additional step of removing unwanted noise from the angular movement data by applying a filter to the angular movement data;
optionally wherein the step of removing unwanted noise includes tuning at least one filter to block or pass angular movement data having a frequency of a predetermined value or falling within a predetermined range of values.

12. The method of claim 10 or 11, in which the determining step includes determining an oscillatory characteristic by determining time elapsed between predetermined types of events in the awning portion movement.

13. The method of claim 10, 11 or 12, in which the determining step includes determining an oscillatory characteristic by determining time elapsed between repetitions of zero-crossing events in a waveform representing the awning portion movement; or
in which the determining step includes determining an oscillatory characteristic by determining time elapsed between peak events or nadir events in a waveform representing awning portion movement.

14. The method of any one of claims 10 to 13, in which the determining step includes determining an oscillatory characteristic by:
determining angular rate of angular awning portion movement, and
determining a frequency of occurrence of the predetermined types of events in the awning portion movement.

15. The method of any one of claims 10 to 14, in which the determining step includes monitoring elapsed times between the predetermined types of events as those events occur within a moving time window that is optimized to allow for detection of damaging awning motion based on elapsed time between the rate of movement signal events.
